# EUROPEAN PATENT SPECIFICATION

(11) **EP 4 196 447 B1**
(45) Date of publication and mention of the grant of the patent: **19.11.2025**
(21) Application number: 21765988.7
(22) Date of filing: 06.08.2021
(51) Int. Cl.: C02F 1/68, G01F 23/292, C02F 1/00, C02F 5/08, F24D 19/00

(54) **DOSING SYSTEM CAPABLE OF DETECTING THE PRESENCE OF THE SUBSTANCE TO BE RELEASED**
DOSIERSYSTEM MIT DER FÄHIGKEIT ZUR ERKENNUNG DER ANWESENHEIT EINER ZU FREISETZENDEN SUBSTANZ
SYSTÈME DE DOSAGE CAPABLE DE DÉTECTER LA PRÉSENCE DE LA SUBSTANCE À LIBÉRER

(30) Priority: 11.08.2020 IT 202000020011
(43) Date of publication of application: 21.06.2023
(73) Proprietor: Manta Ecologica S.r.l., 20900 Monza (MB) (IT)
(72) Inventor: CAVALLI, Luca, 20900 Monza (MB) (IT)
(74) Representative: Fisauli, Beatrice A. M.
(86) International application number: PCT/IB2021/057262
(87) International publication number: WO 2022/034457

(56) References cited:
- FR-A1- 2 615 617
- FR-A1- 2 721 834
- US-A1- 2001 001 511
- US-A1- 2009 008 409
- US-A1- 2011 192 433
- US-B1- 6 647 566

## Description

The present invention relates, in general, to a dosing system in water systems. More particularly, it relates to a dosing system for thermal and hydraulic systems **such as those disclosed in** FR 2 721 834 A1**,** US 2009/008409 A1**,** FR 2 615 617 A1**,** US 2011/192433 A1**,** US 6 647 566 B1 **and** US 2001/001511 A1**.**

As is well known, lime-scale deposits can form in thermal and/or hydraulic systems when water is heated. It is therefore necessary to carry out a chemical conditioning in systems for the production of domestic hot water, as required by Ministerial Decree No. 26 of 2015.

To this end, anti-scale and anti-corrosion products are released into the water by using a proportional dosing system. In fact, these products are introduced proportionally to the passage of water, so exploiting the so-called "Venturi effect", due to which the quantity of anti-scale and anti-corrosion products released into the system is proportional to the quantity of water supplied.

The equipment in question consists of an upper part connected to the system, known as the "dosing body", and of a lower part, known as the "dosing jar", where the anti-scale and anti-corrosion product is stored.

Dosing units according to the known technique have certain problems.

First of all, the connection of the dosing body is usually made by means of screws or dowels that can be used to move the same connection horizontally or vertically. Consequently, the orientation of the connection can only be carried out in steps of 90° or of multiples thereof.

Furthermore, the connection from the dosing body to the hydraulic system according to the known technique is usually two-way and in rare cases a three-way connection. The latter one, however, does not provide for the total passage of the water flow, i.e. the water only passes through the connection where the Venturi effect is applied.

Due to these connection methods, the installer is often forced to use nozzles or hoses as extensions in order to proceed with the assembly of the dosing system.

Another problem with known dosing units is the presence of a by-pass tap, which is closed when the cartridge has to be replaced or when a powdered anti-scale and anti-corrosive product has to be added.

This by-pass tap prevents water from entering and leaving the vessel, while still allowing water to flow through the system. Consequently, if the anti-scale and corrosion product has run out, after replacing or refilling the dosing unit there is a risk of leaving this tap in by-pass condition, so preventing the anti-scale and anti-corrosion product from entering the system with its relative protection.

Furthermore, the dosing accuracy of dosing systems according to known technique is at least doubtful.

In fact, dosing systems according to the known technique have the Venturi effect device arranged in the dosing body, with very narrow passages that can easily become blocked due to crystallisation of the product.

With a partial or complete blocking of these passages, there is a risk that the anti-corrosion and anti-scale product will not be released in the appropriate quantity.

A further problem with dosing systems according to the known technique is the use of a bellows which supplies water into the dosing jar in contact with the product, so as to ensure the same concentration of the product inside the vessel. However, this can lead to inaccurate dosing of the product if the bellows is not in contact with the product.

Still another problem with conventional dosing systems is that it is not possible to quickly understand when the product to be dosed in the dosing jar has run out. As a result, days may pass before the dosing jar is filled with the product to be dosed into the water, so rendering the dosing jar itself useless and ineffective.

It is an object of the present invention to provide a dosing system which overcomes the problems of the known technique.

A further scope of the invention is to provide a dosing system that is efficient.

A further scope of the invention is to provide a dosing system which can be installed without orientation constraints, regardless of the configuration of the system on which it is to be mounted.

A still further object of the invention is to provide a dosing system which enables a prompt understanding of when the product to be dosed and supplied into the system has run out.

According to the invention, these and other purposes are achieved by a dosing system for a system through which a liquid flows, comprising:
- a dosing body which can be connected to the system and in which the passage of the liquid and the simultaneous release of a certain substance into the liquid takes place;
- a dosing jar, connected to the dosing body and comprising a glass capable of containing a substance to be released.
- a detection system capable of detecting inside the glass the presence or absence of the substance to be released.

Thus, the problems associated with the systems according to the known technique are overcome.

Advantageously, the detection system may comprise an alarm device suitable for signaling the running out of the substance within the glass.

According to the invention the detection system comprises an optical device that verifies the presence of a substance within the glass.

Advantageously, the optical device may comprise a light emitter and a light detector suitable for detecting a light emitted by the light emitter when it is reflected by the substance to be released which is present within the glass.

Furthermore, the detection system is housed in a housing formed in the glass.

The detection system is connected via Wi-Fi and/or Bluetooth and/or radio waves and/or cable to a user/operator to whom the exhaustion of the substance to be released within the glass can be signalized.

The substance to be released may be contained in a cartridge retained in the glass.

Advantageously, the cartridge may comprise an integrated filtration system.

Further, the integrated filtration system may comprise a bacteriostatic filtering network.

The cartridge may comprise a labyrinth septum arranged upstream of the filtering network.

Further features and details may be better understood from the following description, which is given as a non-limiting example, as well as from the accompanying drawing board in which:
figure 1 is an exploded side view of a dosing system according to the invention, comprising a dosing body and a dosing jar with a cartridge therein;
figure 2 is a side sectional view of the dosing jar of the dosing system according to the invention, when the cartridge is still full of product to be dosed;
figure 3 is a detail of figure 2;
figure 4 is a cross-sectional side view of the dosing jar of the dosing system according to the invention, when the cartridge is empty;
figure 5 is a detail of figure 4;
figure 6 is a cross-sectional side view of a cartridge usable in the dosing system according to the invention;
figure 7 is a detail of figure 6.

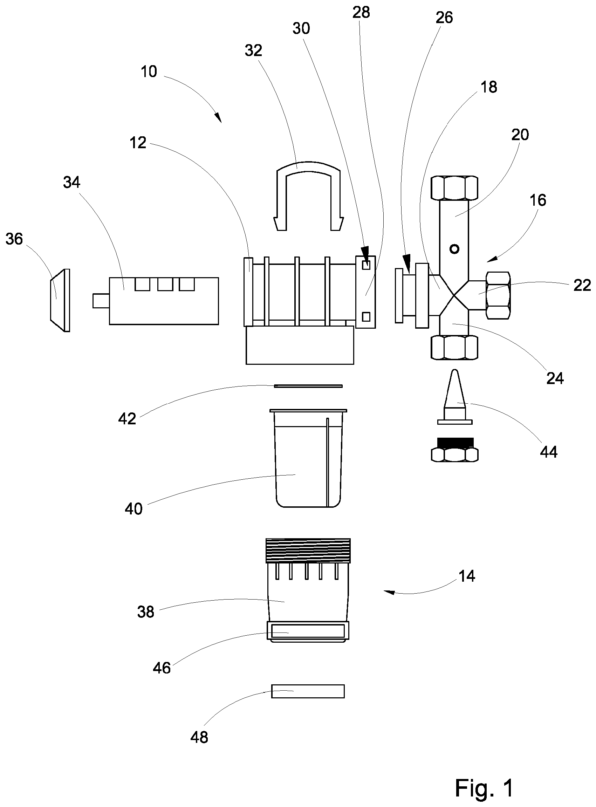

With reference to the annexed figure, in particular to figure 1, 10 indicates in its entirety a dosing system suitable for introducing anti-corrosive and anti-scale products into the water of a system.

The dosing system 10 comprises:
- a dosing body 12 into which the water flows and in which at the same time an anti-corrosive and anti-scale product is released;
- a dosing jar 14, which is screwed to the dosing body 12;
- a connection element 16, for connecting the dosing body 12 with the hydraulic system to be chemically conditioned.

The coupling element 16 comprises a three-way connector, i.e. four ducts which are specifically mutually cross-linked together:
- a first duct 18, connected to the dosing body 12;
- a second duct 20, a third duct 22 and a fourth duct 24, useful to connect the dosing body 12 with the system.

The three-way connection element 16 allows the user to choose the most convenient connection of the system to the dosing system 10, depending on the configuration of the system on which the assembly of the same is to be carried out.

The second duct 20, which is the connection for the water inlet to the boiler, is elongated to facilitate installation.

Consequently, the connection element 16 provided by the dosing system 10 according to the invention includes multiple advantages for installation. In fact, in a single model it is possible to include all the possible configurations of connection to the boiler and to the thermal system present on the market, thus avoiding the use of extensions, nozzles and/or hoses.

Moreover, due to this feature, storing of different models by installers or retailers is avoided.

The first duct 18 is the one connected with the dosing body 12 and includes a groove 26, whereas the dosing body 12 includes at one end an annular body 28 with connection holes 30.

Due to this embodiment the connection element 16 can be connected to the dosing body 12, by means of a bayonet connection, by partially inserting the first duct 18 into the dosing body 12 and locking it such position with a clip element 32 which is inserted into the connection holes 30 and the groove 26.

Such connection mode makes it as easy as possible to orient the dosing body horizontally or vertically, so that it can be adjusted as desired by 360° and not in a stepwise manner like the dosing units according to the known technique.

A rotary selector 34 is housed in the dosing body 12 to which a gripping means 36 is attached so as to form a tap for closing and opening the dosing system 10.

This tap, in the event that the cartridge of anti-scale and anti-corrosion product needs to be replaced, completely closes the flow of water into the system.

In fact, the selector 34 has a length such as to cover also the space inside the coupling element 16, in particular in the area of intersection between the second duct 20, the third duct 22 and the fourth duct 24.

Accordingly, the selector 34 acts as a safety shut-off valve, thus avoiding the need for the installer to install one of those upstream of the dosing system 10, so saving time and reducing space.

In addition, the tap acts as a protection in case one forgets to operate the dosing system after changing cartridges or adding powder. In fact, if the tap is not opened, i.e. if the gripping means 36 is not turned so as to place the selector switch 34 in the water passage configuration, there will be no hot water to the user.

The dosing jar 14 includes a glass 38 suitable for being screwed to the dosing body 12 and which houses a cartridge 40 with the anti-scale and anti-corrosion product.

In particular, the powder cartridge 40 comprises an integrated filtration system. In fact, a bacteriostatic filtering network 42 is integrated in the cartridge 40.

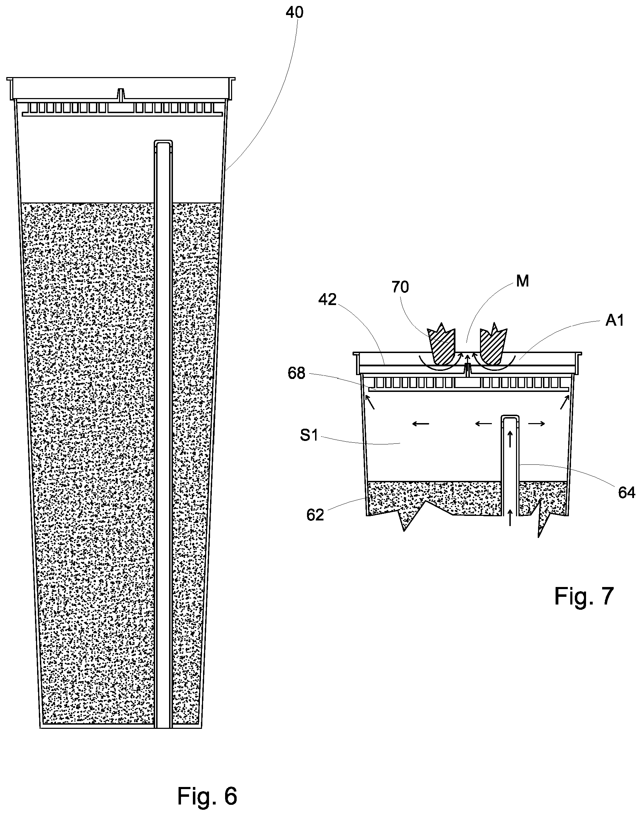

In fact, as illustrated in figures 6 and 7, the cartridge 40 comprises a product 62 to be dosed, usually a polyphosphate, which, by mixing with the water rising from a cannula 64, creates a saturated solution S1.

This saturated solution S1 passes through a labyrinth septum 68 and then mixes with the inlet water A1 within the cartridge, so as to obtain a mixture M of inlet water A1 and saturated solution S1 that exits the cartridge through a duct 70.

The mixing of the inlet water A1 with the saturated solution S1 is achieved due to the Venturi effect.

Furthermore, the inlet water A1 and the saturated solution S1 pass through the bacteriostatic filtering network 42, which prevents clogging of the duct 70.

Thus, the same powdered product cartridge 40 includes a filtration system, i.e., the filtering network 42.

In the dosing system 10 according to the invention, the dosing system due to the Venturi effect is located inside the cartridge. Accordingly, each time the cartridge 40 is replaced, there is a new dosing system and filter cartridge and thus the certainty of a system that is always operating with maximum efficiency is obtained.

The dosing system 10 according to the invention comprises the labyrinth septum 68, which mitigates typical overdoses when the tap is opened and closed.

More particularly, the labyrinth septum 68 avoids overdoses at tap openings, unlike systems according to the known technique where the saturated solution is directly drawn in by the device due a Venturi effect.

Furthermore, in order to improve the proportionality of the dosage, a back-pressure damper, consisting of an elastic membrane 44, has been added to the dosing system according to the invention in order to prevent the back-pressure caused by the sudden closing/opening of the tap from causing increased powder consumption.

The elastic membrane 44 is fitted inside the coupling element 16.

In addition, increasingly precise dosing, combined with the use of powdered products, allows longer lasting cartridges to be made, so reducing the overall dimensions to the advantage of installation under a boiler, where space is reduced.

This is also due to the use of a more concentrated powder product than the normal powder or liquid refills already on the market, which are pre-mixed with water.

The dosing system 10 according to the invention is provided with a system for detecting the presence of the product inside the cartridge 40; the detection system includes an alarm device that signals the possible absence of product in the cartridge 40.

In particular, a housing 46 is provided in the glass 38 of the dispensing jar 14 to accommodate an optical device 48.

The detection system works through the optical device 48 which works by reflection and acts to detect the presence or absence of the product to be dosed inside the cartridge 40.

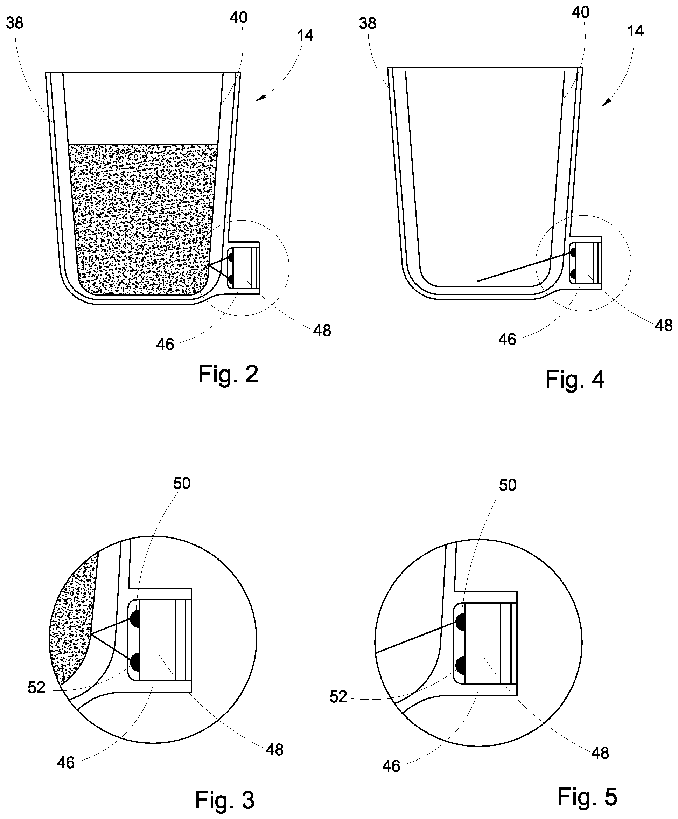

More particularly, according to figures 2 to 5, the optical device 48 comprises a light emitter 50 and a light detector 52.

According to figures 2 and 3, when the cartridge is filled below with the product to be dosed, usually a polyphosphate, the emitter 50 emits a light beam which is reflected by the polyphosphate and thus detected by the detector 52.

In this case, the detection system does not emit any alarm signal as the cartridge is still full.

According to figures 4 and 5, when the cartridge is empty of dosing product, i.e. when it is completely filled with a transparent solution, the light beam emitted by the emitter 50 is not reflected and therefore not detected by the detector 52.

In this case, by noting that when a light beam is emitted by the emitter 50 no signal is detected by the detector 52, the detection system, by means of the alarm device, signals that the cartridge is empty and therefore needs to be replaced.

The alarm device comprises an acoustic and/or an optical signal, which warns the user of the exhaustion of the product and therefore of the time to replace the cartridge.

The signal can be transmitted through Bluetooth, WiFi, radio waves or others.

For example, the detection system may also be used for condensate filters, used in condensing boilers, and comprising a dolomite cartridge. In this case, the detection system will indicate when the dolomite refill is exhausted.

Furthermore, the detection system as described can also be used to check the presence of product in cartridges used for other and different applications, such as magnesium cartridges for dosing in drinking water, deoxygenating cartridges for heating systems, cartridges with resins for specific water for irons, cartridges with calcium hypochlorite and polyphosphate for disinfecting sanitary water, cartridges with powder conditioner for heating systems, cartridges with calcium carbonate for coffee machines.

Variants can also be provided which are considered to be within the scope of the invention as defined in the appended claims. For example, the detection system present in the dosing system according to the invention can also be implemented in the case where the substance to be released is not contained in a cartridge, but is free inside the glass of the dosing jar.

## Claims

1. Dosing system (10) for a system crossed by a liquid, including:
- a dosing body (12) that can be connected to the system and in which the liquid passes through and a certain substance is released into the liquid at the same time;
- a dosing jar (14), connected to the dosing body (12) and including a glass (38) capable of containing a substance to be released;
- a detection system (48) capable of detecting inside the glass (38) the presence or absence of the substance to be released; **characterized in that** the detection system includes an optical device (48) that verifies the presence of the substance inside the glass (38); **that** the detection system is housed in a housing (46) in the glass (38); **and that** the detection system is connected via Wi-Fi and/or Bluetooth and/or radio waves and/or cable to a user/operator to whom it signals the exhaustion of the substance to be released inside the glass (38).

2. Dosing system (10) according to the preceding claim, wherein the detection system (48) includes an alarm device to signal the exhaustion of the substance inside the glass (38).

3. Dosing system (10) according to the preceding claim, wherein the optical device (48) includes a light emitter (50) and a light detector (52) capable of detecting the light emitted by the emitter (50) when it is reflected by the substance to be released present inside the glass (38).

4. Dosing system (10) according to one of the preceding claims, wherein the substance to be released is contained in a cartridge (40) placed in the glass (38).

5. Dosing system (10) according to the preceding claim, wherein the cartridge (40) includes an integrated filtration system.

6. Dosing system (10) according to the preceding claim, wherein the integrated filtration system includes a bacteriostatic filtering network (42).

7. Dosing system (10) according to the preceding claim, wherein the cartridge (40) includes a labyrinth septum (68) placed upstream of the filtering net (42).

## Patentansprüche

1. Dosiersystem (10) für ein von einer Flüssigkeit durchströmtes System, umfassend:
- einen Dosierkörper (12), der mit dem System verbunden werden kann und durch den die Flüssigkeit hindurchfließt, wobei gleichzeitig eine bestimmte Substanz in die Flüssigkeit freigesetzt wird;
- ein Dosiergefäß (14), verbunden mit dem Dosierkörper (12) und enthaltend ein Glas (38), das geeignet ist, die freizugebende Substanz aufzunehmen;
- ein Detektionssystem (48), das im Inneren des Glases (38) die Anwesenheit oder Abwesenheit der freizugebenden Substanz erkennen kann;
**gekennzeichnet dadurch, dass** das Detektionssystem eine optische Vorrichtung (48) umfasst, die die Anwesenheit der Substanz innerhalb des Glases (38) prüft; **dass** das Detektionssystem in einem Gehäuse (46) im Glas (38) untergebracht ist; **und dass** das Detektionssystem über Wi-Fi und/oder Bluetooth und/oder Funkwellen und/oder Kabel mit einem Nutzer/Operateur verbunden ist, dem es die Erschöpfung der im Glas (38) freizugebenden Substanz signalisiert.

2. Dosiersystem (10) nach Anspruch 1, wobei das Detektionssystem (48) eine Alarmvorrichtung enthält, um das Erschöpfen der Substanz im Glas (38) anzuzeigen.

3. Dosiersystem (10) nach Anspruch 2, wobei die optische Vorrichtung (48) einen Lichtsender (50) und einen Lichtdetektor (52) umfasst, die in der Lage sind, das vom Sender (50) ausgesandte Licht zu detektieren, wenn es von der im Glas (38) vorhandenen freizugebenden Substanz reflektiert wird.

4. Dosiersystem (10) nach einem der vorhergehenden Ansprüche, wobei die freizugebende Substanz in einer Patrone (40) enthalten ist, die in das Glas (38) eingesetzt ist.

5. Dosiersystem (10) nach Anspruch 4, wobei die Patrone (40) ein integriertes Filtersystem umfasst.

6. Dosiersystem (10) nach Anspruch 5, wobei das integrierte Filtersystem ein bakteristatisches Filternetz (42) umfasst.

7. Dosiersystem (10) nach Anspruch 6, wobei die Patrone (40) eine labyrinthartige Trennwand (68) enthält, die stromaufwärts des Filternetzes (42) angeordnet ist.

## Revendications

1. Système de dosage (10) pour un système traversé par un liquide, comprenant :
- un corps de dosage (12) susceptible d'être connecté au système et dans lequel le liquide circule, tandis qu'une certaine substance est libérée dans le liquide simultanément;
- un bocal de dosage (14), connecté au corps de dosage (12) et comprenant un verre (38) capable de contenir la substance à libérer;
- un système de détection (48) capable de détecter à l'intérieur du verre (38) la présence ou l'absence de la substance à libérer; **caractérisé en ce que** le système de détection comprend un dispositif optique (48) qui vérifie la présence de la substance à l'intérieur du verre (38); que le système de détection est logé dans un boîtier (46) dans le verre (38); et que le système de détection est connecté via Wi-Fi et/ou Bluetooth et/ou ondes radio et/ou câble à un utilisateur/opérateur à qui il signale l'épuisement de la substance à libérer à l'intérieur du verre (38).

2. Système de dosage (10) selon la revendication précédente, dans lequel le système de détection (48) comprend un dispositif d'alarme pour signaler l'épuisement de la substance à l'intérieur du verre (38).

3. Système de dosage (10) selon la revendication précédente, dans lequel le dispositif optique (48) comprend un émetteur de lumière (50) et un détecteur de lumière (52) capables de détecter la lumière émise par l'émetteur (50) lorsqu'elle est réfléchie par la substance à libérer présente à l'intérieur du verre (38).

4. Système de dosage (10) selon une des revendications précédentes, dans lequel la substance à libérer est contenue dans une cartouche (40) placée dans le verre (38).

5. Système de dosage (10) selon la revendication précédente, dans lequel la cartouche (40) comprend un système de filtration intégré.

6. Système de dosage (10) selon la revendication précédente, dans lequel le système de filtration intégré comprend un réseau filtrant bactériostatique (42).

7. Système de dosage (10) selon la revendication précédente, dans lequel la cartouche (40) comprend une cloison labyrinthique (68) placée en amont du réseau filtrant (42).
